# EUROPEAN PATENT SPECIFICATION

(11) **EP 4 479 732 B1**
(45) Date of publication and mention of the grant of the patent: **19.08.2026**
(21) Application number: 23701449.3
(22) Date of filing: 20.01.2023
(51) Int. Cl.: G01N 21/67, G01N 21/69

(54) **EXCHANGEABLE SPARK UNIT AND CALIBRATION METHOD**
AUSTAUSCHBARE ZÜNDEINHEIT UND KALIBRIERVERFAHREN
UNITÉ D'ALLUMAGE ÉCHANGEABLE ET PROCÉDÉ D'ÉTALONNAGE

(30) Priority: 15.02.2022 EP 22156761
(43) Date of publication of application: 25.12.2024
(73) Proprietor: Heraeus Electro-Nite International N.V., 3530 Houthalen (BE)
(72) Inventor: VRANCKX, Luc, 3530 Houthalen (BE); VERHOEVEN, Jean-Paul, 3530 Houthalen (BE); KODACH, Vitali, 3530 Houthalen (BE)
(74) Representative: Heraeus IP
(86) International application number: PCT/EP2023/051368
(87) International publication number: WO 2023/156131

(56) References cited:
- WO-A2-2021/048382
- CN-A- 109 341 853
- JP-A- H10 281 995
- US-A1- 2004 051 866
- US-A1- 2021 285 820

## Description

The invention relates to an exchangeable spark unit for an optical emission spectrometer, a system for analyzing a sample using optical emission spectrometry and a method for calibrating an exchangeable spark unit.

During the different stages of metallurgic steel processing, e.g. converter processing, samples are taken from the molten steel and analyzed in order to determine the chemical composition. This allows to control the process stages and to adjust the properties of the produced steel. Typically, spark optical emission spectroscopy (OES) is used to determine the chemical composition of a steel sample. In this method, a spark is generated between a solid steel sample and an electrode using electrical energy, e.g. as described in US 5 285 251. Through this, atoms or ions of the sample are excited and create a discharge plasma having a unique emission spectrum for each chemical element. Optical processing and analysis of the spectral lines of this spectrum allows for determining the presence of the present chemical elements. By using a suitably calibrated system, also the quantities and, thus, the chemical composition of the sample can be determined. Such methods are disclosed in US 4592655 A, US 7911606 B2 and DE 3344944 A1.

In early methods, samples were cooled down and mechanically prepared by grinding. In addition, analysis was performed spatially separated from the sampling point, i.e. the steelmaking plant. Thus, long durations occurred between sampling and receiving the results. Devices and methods have been developed to accelerate this process.

Eliminating the need for surface preparation shortens the analysis time and is economically favorable to the metal producer. Various solutions to this problem are described in EP 3336511 A1, EP 3336512 A1, EP 3336513 A1, EP 3336514 A1, EP 3581913 A1 and EP 3581914 A1. These documents relate to Direct Analysis (DA) samplers which are a type of molten metal immersion sampler, which produce DA samples. DA samples do not require any kind of surface preparation before being analyzed, and thus can result in significant economic benefit both in terms of the availability of timely chemistry results as well as laboratory time savings by utilizing the spark-OES analysis method.

During spark OES, contamination occurs in the spark chamber of the spectrometer and the adjacent areas due to particles removed from the sample by sparks. Such particles may accumulate on optical elements such as windows, mirrors, lenses or detectors and have to be removed in order to ensure consistent quality of the analysis. As such cleaning is time-consuming, OES systems have been provided which comprise an exchangeable spark unit. Thus, the spark unit can be replaced after one or more measurements in order to be ready for the next analysis within minutes. Such systems are disclosed in WO 2021/048382 A2 and GB 2592853 A, originating from the same family, and US 2021/0285820 A1. A handheld apparatus for spectrometric analysis is known from US 4411524 A.

However, known spectrometers have to be calibrated or re-calibrated after replacement of the spark unit in order to obtain reliable results. Due to the nature of the analysis, even small deviations from the desired values lead to significant differences in the light to be analyzed and, thus, the analytic result. For example, small deviations from the desired distance between the electrode and the sample or the desired distance between the spark and the optical components for processing the emitted light lead to a major reduction of light intensity and, if applicable, in an altered light composition. Different deviations may add. However, replacement of the spark unit and re-calibration are time-consuming and labor-intensive.

An exchangeable spark unit for a spectrometer is known from US 2004/051866 A1.

The problem to be solved is to provide a spark unit, a system and a calibration method that enable for a fast and easy replacement of a spark unit.

The problem is solved by the exchangeable spark unit according to claim 1 and a method according to claim 14. Embodiments arise from the dependent claims.

An exchangeable spark unit for an optical emission spectrometer serves to solve the task. The exchangeable spark unit comprises a sample carrier defining a sample plane for positioning a sample to be analyzed. Said sample carrier has an aperture. The exchangeable spark unit comprises an electrode arranged in a distance to the sample plane in the region of the aperture such that a spark can be generated between the electrode and a sample positioned in the sample plane for emitting light. The exchangeable spark unit further comprises a coupling interface for mechanically coupling the exchangeable spark unit with the optical emission spectrometer and an optical component for influencing the emitted light.

According to the invention, the electrode and the optical component are contained in the same compartment of the exchangeable spark unit, i.e. the electrode and the optical component are arranged in a single compartment of the exchangeable spark unit. Thus, the components can be exchanged together and the replacement of the spark unit is facilitated. Additionally, the exchangeable spark unit can be calibrated prior to its installation and/or replacement.

In particular, the sample carrier, the electrode and the coupling interface of the exchangeable spark unit are made from metal. In particular, the electrode is made from tungsten. The electrode may be electrically insulated from the sample carrier.

The exchangeable spark unit according to the invention comprises an optical component which influences the light before it enters the optical emission spectrometer. Therefore, part of the optical influencing or processing required for analyzing the light spectrum in the spectrometer in order to determine the sample composition is already performed in the exchangeable spark unit. The light path between the spark position and the optical component is not influenced when the spark unit is exchanged. This light path can be exactly adjusted in the exchangeable spark unit. The exchangeable spark unit according to the invention thus allows parts of the path the light travels between the spark and the spectrometer to be defined in a fixed manner in the spark unit. Thus, it is possible to exchange a contaminated exchangeable spark unit by a new one which is already calibrated which defines exactly the same light path. A major part of the light path is not affected by exchanging the spark unit. Therefore, no re-calibration of the whole instrument is required after exchanging the spark unit according to the invention.

In particular, the exchangeable spark unit and the optical emission spectrometer serve for analyzing samples during a steelmaking process in a steel plant close to a steel converter. Thus, the devices have to work reliably under harsh conditions including heat and contamination. Therefore, rapid and easy replacement of the exchangeable spark unit is required. In addition, in this environment, samples have to be analyzed regularly in time intervals of 30 to 45 minutes. For this reason, replacement of the spark unit needs to be completed in less than 20 minutes. This is possible with the exchangeable spark unit according to the invention, as no re-calibration is needed. A long-lasting operation of the spectrometer can be achieved by regular replacement of the spark unit.

A spark unit is a device by means of which a spark can be generated in order to analyze a sample. A spark is in particular generated by means of electrical energy applied between the sample and the electrode. A sample carrier is a component on which a sample can be positioned for analysis. The aperture is an aperture in the sample carrier which is arranged in the sample plane and completely passes through the sample carrier such that there is a free space between the sample arranged on the sample carrier and the electrode, in particular the electrode tip. Thus, a spark can be generated in the free space. The distance between the electrode and the sample plane is in particular between 1 mm and 4 mm, more particularly between 1.5 mm and 2.5 mm and preferably approximately 2 mm.

The electrode is arranged in the region of the aperture. This enables a spark to be generated between the electrode and a sample positioned in the sample plane. In particular, the electrode is arranged co-axially with the aperture. The electrode may comprise a cylindrical and/or conical shape. Preferably, the electrode has an electrode body and an electrode tip, wherein a diameter of the electrode tip is smaller than a diameter of the electrode body. The electrode tip may be pointed and/or sharpened in order to ensure a stable spark position. The electrode body may be essentially cylindrical, in particular circular cylindrical. The electrode may comprise an electrode head having the electrode tip, said electrode head being pyramidal and/or pointed. In one configuration, the electrode is arranged essentially vertically. In particular, the electrode is generally elongated and/or pin-shaped. The aperture may have a circular cross-section. The central axis of the electrode may run through the aperture, in particular through the center of the aperture. The claimed design prevents spark generation between the sample carrier and the electrode. In addition, an insulating element may be provided between the electrode and the housing of the exchangeable spark unit for electrical insulation.

In a preferred configuration, the sample plane is horizontal. Thus, the sample can be positioned and, if applicable, fixed in a convenient manner. Preferably, the sample carrier has an even surface which defines the sample plane. The sample plane, in particular the even surface, may form the upper surface of the exchangeable spark unit. The sample is in particular a metal sample.

Due to the spark, light is emitted which is characteristic of the sample composition. The exchangeable spark unit is coupled with the optical emission spectrometer for analyzing the emitted light. In the following, optical emission spectrometer is referred to as spectrometer. The spark unit is exchangeable, as it can be mechanically decoupled from the spectrometer and another spark unit according to the invention can be mechanically coupled to the spectrometer.

The coupling interface contacts the spectrometer and, thus, defines the position of the exchangeable spark unit with respect to the spectrometer. Typically, the coupling interface defines at least the height position of the exchangeable spark unit (position in the height direction or z direction). In particular, the spectrometer and the exchangeable spark unit are not movable with respect to each other in the coupled state at least when no external force is applied. The coupling interface may comprise one or more surfaces which can be positioned adjacent to corresponding surfaces of the spectrometer. In particular, the exchangeable spark unit can be coupled to a housing of the spectrometer in which the components for the optical detection are enclosed. The coupling interface may define a coupling plane. The coupling plane may be the bottom surface of the exchangeable spark unit. This enables a particularly convenient and error-free installation of the exchangeable spark unit.

In particular, the exchangeable spark unit comprises a light outlet. A light outlet is an outlet through which the light influenced by the optical component can pass out of the spark unit in order to enter the spectrometer for analysis.

Optical components are components that influence or change at least one property of incident light. The optical component may be, among others, a lens, mirror, filter, beam splitter, prism, optical slit or diffraction grating. Thus, one or more of an intensity, direction, focus, dispersion, composition, and/or further properties of the incident light can be influenced. A gaseous medium or an optical fiber is not an optical component according to the invention. In particular, the optical component of the exchangeable spark unit does not attenuate light by more than 10%.

In one embodiment, the exchangeable spark unit includes a first hollow space for light to pass from the spark to be generated to the optical component and a second hollow space for light to pass from the optical component towards a light outlet of the exchangeable spark unit. The compartment which contains the electrode and the optical component of the exchangeable spark unit comprises the first and the second hollow space, i.e. the first and the second hollow space form at least a part of the volume of the compartment. In particular, an angle α between a longitudinal extension of the first hollow space and a longitudinal extension of the second hollow space is between 45° and 120°, more particularly between 90° and 110°.

A hollow space serves to transmit light. Typically, the first and/or second hollow spaces have a generally cylindrical shape and/or are be realized as tubes. The angle α is measured along the central longitudinal axes of the respective hollow spaces which may define the centerline of the light to pass. Below 45°, too much construction space would be needed, as the hollow space would be positioned far from the electrode. In particular, the angle is above 90° in order to keep the sample plane free of any disturbing components. Between 90° and 110°, an optimal usage of space is enabled. In one configuration the angle α is approximately 100°. In particular, the second hollow space is at least essentially vertical.

In one embodiment, the exchangeable spark unit comprises a mirror as the optical component. In particular, the optical component is a mirror for reflecting emitted light. Thus, light can be directed along a predetermined path and/or towards one or more further optical components so that the emitted light can be analyzed by the spectrometer. This embodiment enables a compact construction as the light can be directed towards the spectrometer close to the electrode.

In one embodiment, the exchangeable spark unit includes a first hollow space for light to pass from the spark to be generated to the mirror and a second hollow space for light to pass from the mirror towards a light outlet of the exchangeable spark unit. In particular, an angle α between a longitudinal extension of the first hollow space and a longitudinal extension of the second hollow space is between 45° and 120°, more particularly between 90° and 110°.

In one embodiment, the mirror is configured to reflect incident light having an angle β between 5° and 20° with respect to the sample plane, preferably between 8° and 12°. If the angle was smaller, the sample plane would be disturbed by the mirror. At larger angles, the spark cannot be completely represented in the emitted light. In addition, the black body radiation from the hot sample spark area will then enter the spectrometer which leads to an increased stray light level. It can be preferred, that β is approximately 10°.

In one embodiment, the mirror is arranged such that light reflected by the mirror runs essentially vertically downwards. The sample plane is typically aligned horizontally. Thus, the light reflected by the mirror typically runs perpendicular to the sample plane. This enables a particularly small construction space.

In one embodiment, the exchangeable spark unit comprises a window for allowing light to pass towards the optical emission spectrometer while closing a hollow space for light to pass through the exchangeable spark unit

The window acts as a light outlet for the light influenced by the optical component. The closing contributes to keeping inert gas inside the respective hollow space. In particular, the window allows light to pass from the second hollow space to the optical emission spectrometer while closing the second hollow space. An O-ring may be arranged, e.g. around the further optical component, e.g. the filter, to contribute to closing the second hollow space.

In one embodiment, the window is configured as an optical component. In particular, the window is configured as a filter that allows only a part of the incident light to be passed to the optical emission spectrometer or as a lens. In other words, the filter reduces the light intensity. Thus, the overall light intensity can be adapted to an amount suitable for analysis in the spectrometer. The filter may be a neutral density filter. Preferably, the filter is configured to pass less than 50%, more preferably less than 30%, of the incident light. In one configuration, the filter attenuates the light intensity by a factor of 10. In one configuration, an additional optical component may be arranged in the exchangeable spark unit. The additional optical component may be a lens or a filter. Thus, a filter may be arranged above the lens which acts as the window.

In one embodiment, the electrode comprises a bearing surface and the exchangeable spark unit comprises a positioning element for positioning the bearing surface in the exchangeable spark unit such that the distance between the electrode and the sample plane is determined by the positioning element.

The bearing surface is typically positioned with respect to at least one other part of the exchangeable spark unit which is fixed in position to the sample plane. In other words, the positioning element in particular serves for defining a distance between the electrode and at least one other part of the exchangeable spark unit.

By adjusting/selecting the height of the positioning element, the distance D between the electrode and the sample plane can be adjusted. In this way, the distance D can be set in a particularly precise manner. In particular, the positioning element can be selected before coupling the exchangeable spark unit to the spectrometer in order to obtain a fixed distance D. in particular, the electrode can be adjusted in height by turning like a screw. Thus, it can be ensured that said distance D is accurate which enables particularly precise measurement after exchanging the spark unit without re-calibration. In one configuration, the electrode can be fixed in the mounted state.

The positioning element may for example be a precision washer which is exactly fitted to measure in order to adjust said distance D.

In one embodiment, the exchangeable spark unit comprises a gas inlet arranged in the second hollow space. Thus, the second hollow space and, subsequently also the first hollow space can be filled with an inert gas heavier than air such as argon. In particular, the gas inlet is positioned at a low position of the second hollow space.

In one embodiment, the exchangeable spark unit comprises a gas outlet arranged in a third hollow space through which the electrode extends. This allows for a downwards flow of inert gas such as argon from the electrode tip to the gas outlet. The third hollow space may be essentially cylindrical at least in sections. At least a part of the electrode is disposed within the third hollow space. In particular, the gas outlet is arranged at a lower position than the electrode tip. Thus, gravity can support the transport of ablated material to the gas outlet.

In one embodiment, the exchangeable spark unit comprises a fixing means for mechanically fixing the exchangeable spark unit to an optical emission spectrometer in a mechanically coupled state. In particular the fixing means includes one or more screws. In other words, the exchangeable spark unit can be mechanically fixed in the coupled state with the spectrometer. In particular, all degrees of freedom are constrained so that a firm connection in the exchangeable spark unit and the spectrometer is achieved.

In one embodiment, the exchangeable spark unit comprises a positioning pin or a receiving space for receiving a positioning pin for positioning the exchangeable spark unit with respect to the optical emission spectrometer. The positioning pin may be attached to the exchangeable spark unit or to the optical emission spectrometer. The respective other item then comprises a receiving space for receiving the positioning pin. It is also possible that the positioning pin is a separate element which is placed inside a receiving space of the exchangeable spark unit and a receiving space of the spectrometer. In particular, the positioning pin is perpendicular to the lower surface of the exchangeable spark unit and/or the upper surface of the optical emission spectrometer. The positioning pin defines at least a relative position along said surfaces.

In one embodiment, the exchangeable spark unit comprises an orientation means to reach a defined angular orientation between the exchangeable spark unit and the spectrometer when in a mechanically coupled state. The orientation means ensures the correct positioning of the exchangeable spark unit on the spectrometer, in particular in at least two directions perpendicular to each other which may be referred to as x and y directions. In one configuration, a positioning pin may be arranged non-centrally such that it serves as orientation means. In other words, the positioning pin has an offset. It may be shaped in a non-rotationally symmetrical manner. A suitable positioning pin may serve for rotationally and translationally positioning the exchangeable spark unit with respect to the spectrometer. The orientation means may alternatively or additionally comprise a form element such as at least a part of an outer contour of a component which interacts with a corresponding form element for positioning.

In one embodiment, the sample carrier is made from an electrically conductive material and comprises an electrical contact for applying an electrical potential to the sample positioned on the sample carrier via the sample carrier. In other words, the sample carrier contacts the sample and, thus, forms part of the open electric circuit between the power source, the electrode and the sample which is temporarily closed by the spark in order to analyze the sample. In one configuration, the sample plane is aligned essentially horizontally during use as intended.

In one configuration, the exchangeable spark unit comprises a housing. The sample plane may define an upper surface of the housing. In one configuration, the coupling interface and a light outlet of the exchangeable spark unit may be arranged on a lower side of the housing.

The housing can be made from metal. In particular, the sample carrier, the electrode, the coupling interface and/or the housing of the exchangeable spark unit can be made from metal. The electrode may be electrically insulated from the housing and the sample carrier.

In particular, the sample plane and a plane defined by the coupling interface are parallel to each other. Typically, the two planes are arranged horizontally. This enables a convenient and error-free installation of the exchangeable spark unit to the spectrometer and, at the same time, a convenient and error-free positioning of the sample on the sample interface.

A further aspect of the invention is a system for analyzing a sample using optical emission spectrometry. The system comprises an exchangeable spark unit according to the invention and an optical emission spectrometer. The optical emission spectrometer comprises a coupling interface to which the coupling interface of the exchangeable spark unit can be mechanically coupled. The coupling interface of the optical emission spectrometer is typically arranged on a housing of the spectrometer and preferably forms an upper surface of the spectrometer. All features, embodiments and advantages of the exchangeable spark unit mentioned above may also be valid for the system and vice versa.

In one embodiment, the system comprises a sample fixing means for fixing the sample to be analyzed on the sample carrier.

The optical emission spectrometer may for example be a Czerny-Turner type spectrometer. In this case, a grating which diffracts the incident light is arranged between a first mirror (collimation mirror) and a second mirror (focusing mirror) which focuses the different peaks of the incident light (maxima of spectrum). Through the grating, the light can be directed to a point where a spectrum can be analyzed, e.g. to a CCD detector.

A further aspect of the invention is a method according to claim 14 for calibrating an exchangeable spark unit. The method comprises providing an exchangeable spark unit according to the invention. The method further comprises detecting the distance D between the electrode and the sample plane and, if the distance D deviates from a desired distance, adjusting a mounting position of the electrode. The mounting position of the electrode is the position of the electrode inside a housing of the exchangeable spark unit with respect to said housing or to another reference point of the exchangeable spark unit. Detecting the distance may be performed by a calibration measurement and/or using the optical emission spectrometer. Providing a precise distance D is crucial for analysis. The calibration method thus enables to exchange the spark unit without the need to re-calibrate the whole instrument.

In particular, determining if the distance deviates from a desired distance is performed by comparing the detected distance with the desired distance and in case that the difference exceeds or falls below a predetermined threshold, decision is made that the distance deviates from the desired distance. This means, the mounting position is only adjusted in case the difference exceeds or falls below the threshold. In one configuration, the desired distance is 2 mm and/or the threshold is ±0.05 mm. In one configuration, the threshold is less than ±5% of the desired distance, preferably ±2.5% of the desired distance.

In particular, adjusting the mounting position of the electrode comprises
- adjusting a height of the electrode, in particular by screwing, and
- inserting a positioning element selected according to its height to fix the height of the electrode.

In one embodiment, the method further comprises detecting a height H of the exchangeable spark unit and, if the height H deviates from a desired height, adjusting the height H of the exchangeable spark unit. The height H is the height of a part or the whole exchangeable spark unit. In particular, the height is measured between the sample plane and the coupling interface, e.g. the lowest point of the coupling interface. Also, the height H influences the length of the light path and, thus, the analysis. Thus, this embodiment allows for a high-precision analysis.

Adjusting the height refers to any step which influences the height measured. Adjusting the height is in particular performed by machining, e.g. grinding. Machining is preferably performed on the sample carrier.

Similarly to the above, decision that the height deviates the desired distance may be made in case that the height exceeds or falls below a predetermined threshold.

In one configuration, the method further comprises mechanically coupling the exchangeable spark unit to the optical emission spectrometer. The method can then also be referred to as method for preparing a system for analyzing a sample using optical emission spectrometry. The coupling step and the step of detecting the distance and adjusting may in principle be performed in any order. However, the detecting and adjusting step is preferably performed before the coupling step and, in particular, before delivering the exchangeable spark unit. The optional detecting the height step is in particular performed before the coupling step. Thus, the exchange of spark units can be performed particularly rapidly.

In one configuration, the exchangeable spark unit comprises a mounting block which is typically made of metal. The mounting block may directly or indirectly hold at least one of the different components such as the sample carrier, the optical component, or the electrode. The mounting block may constitute at least one of the different components such as the coupling interface. In one configuration, the mounting block is manufactured by machining in a CNC machine, in particular a multi-axis CNC mill, using only one single setup. In other words, the piece of metal is mounted in the machine and it is not released until the final mounting block is finished. Thus, particularly low tolerances regarding distances, lengths and angles are enabled which are not possible using classic machining tools.

In the following, an exemplary implementation of the invention is explained in more detail using figures. Features of the exemplary implementation can be combined individually or in a plurality with the claimed objects, unless otherwise indicated. The scope of protection is defined by the appended claims.

The figures show:
- Figure 1:: a sectional view of system according to the invention;
- Figure 2:: an enlarged detail "A" of figure 1; and
- Figure 3:: a perspective view of a system according to the invention.

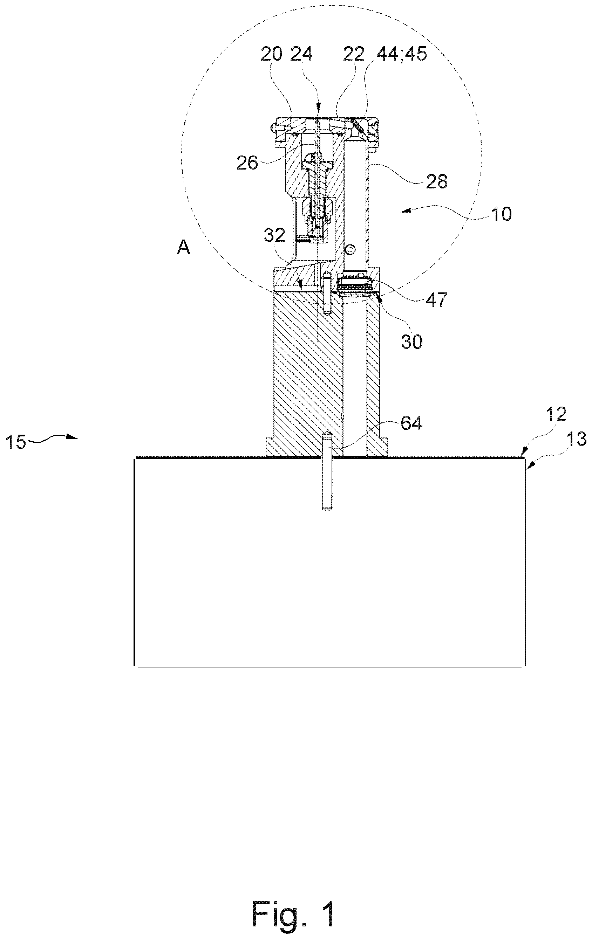

Figure 1 shows a system 15 according to the invention. The system comprises an exchangeable spark unit 10 according to the invention, which is shown above in a circle marked with "A". The exchangeable spark unit 10 is mechanically coupled with an optical emission spectrometer 12, for example a Czerny-Turner spectrometer 13. For this purpose, the exchangeable spark unit 10 comprises on a lower side a coupling interface 30 which is realized as a horizontal plane and the optical emission spectrometer 12 comprises on an upper side a corresponding coupling interface 32 which is also realized as a horizontal plane. In the coupled state shown in figure 1, the coupling interfaces 30, 32 lie on one another.

The optical emission spectrometer 12 may comprise optical components such as an optical slit, a collimation mirror, a diffraction grating, a focusing mirror and/or a detector such as a CCD detector. These components and in particular also further elements of the optical emission spectrometer 12 may be housed in a suitable housing which may consist of one or more parts. The coupling interface 32 may be formed by the housing.

The exchangeable spark unit 10 comprises a sample carrier 20 defining a sample plane 22 on which a sample to be analyzed can be positioned. The sample carrier 20 is formed by an upper wall of the housing 28 of the exchangeable spark unit 10. The sample plane 22 corresponds to the upper surface of the exchangeable spark unit 10. An aperture 24 is formed in the sample carrier 20. The exchangeable spark unit 10 further comprises an electrode 26 which is arranged in a distance to the sample plane 22 centrally below the aperture 24. A spark can be generated between the electrode 26 and a metallic sample positioned in the sample plane 22 by applying an electrical potential between the sample and the electrode 26. As a consequence, light is emitted which is composed dependent on the sample composition. The light travels from the spark position through the exchangeable spark unit 10 and through window 47 in a downward direction into the optical emission spectrometer 12 in order to be analyzed.

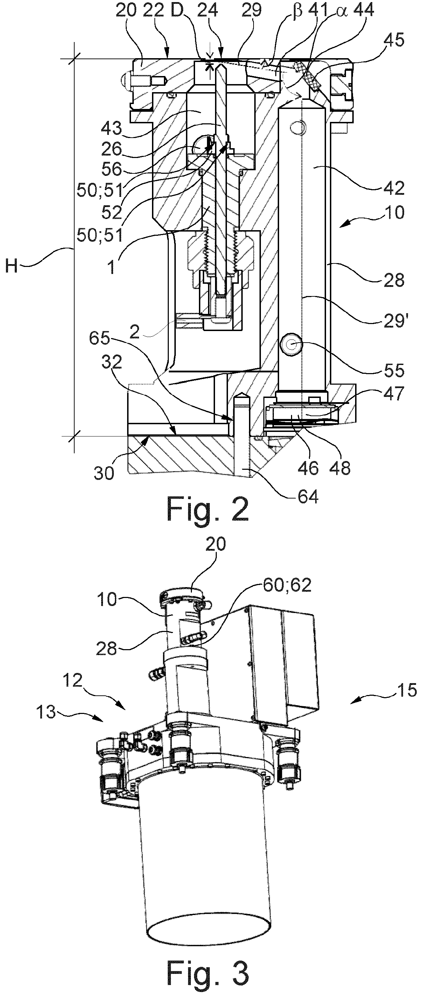

Figure 2 shows detail "A" of figure 1 in an enlarged view. The figure shows a centerline 29 of the light beam between the spark position and an optical component 44 which influences the emitted light and which is a mirror 45 in the configuration shown here. However, in alternative configurations with potentially deviating light directions, the optical component can also be realized, for example, as a lens, a filter, or a prism. In the configuration shown, the centerline 29 forms an angle β of approximately 10° with respect to the sample plane 20. The light reflected by the mirror 45 runs vertically downwards towards the light outlet 46 through which the light leaves the exchangeable spark unit 10 to subsequently enter the optical emission spectrometer.

The light passes from the spark position to the mirror 45 inside the first hollow space 41. A major part of the first hollow space 41 is configured as a cylindrical tube. The light reflected by the mirror 45 passes through the second hollow space 42 which is also configured as a cylindrical tube to a major part. An angle α between a longitudinal extension of the first hollow space 41 and a longitudinal extension of the second hollow space 42 is approximately 100°. The angle α can also be measured between the centerline 29 in the first hollow space 41 and the centerline 29' in the second hollow space 42.

The light outlet 46 is realized as a window 47 which closes the second hollow space 42 in a downwards direction. The window 47 may be configured as a further optical component, namely a filter 48 allowing only a part of the incident light to be passed to the optical emission spectrometer.

A gas inlet 55 is arranged close to the lower end of the second hollow space 42. A gas outlet is arranged at or near the bottom of the third hollow space 43 in which the electrode 26 is arranged. An inert gas which is in particular heavier than air, for example argon, can be introduced into the gas inlet 55 to gradually fill the second hollow space 42 from bottom to top. When further inert gas is introduced, also the first hollow space 41 and subsequently the third hollow space 43 will be filled. Part of the gas may leave the exchangeable spark unit 10 through the aperture 24. Another part of the gas may leave the exchangeable spark unit 10 through the gas outlet 56. Typically, a continuous gas flow is generated during analysis. During spark generation, a high volume flow may be generated and/or between spark generations a low volume flow may be generated. Thus, ablated material from the sample is hindered to enter the first hollow space 41 and the second hollow space 42 but is rather transported downwards to exit through the gas outlet 56.

The electrode 26 is essentially pen-shaped and vertically aligned. It comprises on its bottom an electrical connection 2 for applying an electrical potential between the electrode 26 and the sample. It comprises at its top an electrode tip which is used for spark generation together with the sample. A distance D between the electrode tip and the sample plane 24, i.e., also the distance between the electrode tip and the sample, may be 2.0 mm. The electrode 26 comprises a circumferential shoulder 51 which forms horizontally aligned bearing surface 50. The electrode 26 rests on a positioning element 52 which may be arranged around the circumference of the electrode 26 or at least a part of it. Thus, the positioning element 52 defines the distance D. The positioning element 52 may be rotationally symmetric. The lower part of the electrode 26 is surrounded by an electrical insulation 2.

In particular, the exchangeable spark unit 10 is configured such that the positioning element 52 can be removed and replaced by another positioning element 52. Then, the distance D can be adjusted by replacing the positioning element 52. In this manner a desired distance can be adjusted in a precise manner so that a calibration of the system is not necessary prior to measurement even after exchanging the exchangeable spark unit 10.

The sample carrier 20 is made from metal and comprises an electrical contact for applying an electrical potential to the sample via the sample carrier 20. The electrical contact may be realized as a spark pin made from tungsten as shown in Figure 2.

In the configuration shown in figure 2, the housing 28 of the exchangeable spark unit 10 includes a mounting block. The mounting block may directly or indirectly hold or form different components. The mounting block forms the coupling interface 30 and the second hollow space 42 and holds the mirror 45 and optionally the electrode 26. In addition to the mounting block, the housing 28 comprises a top part including the sample carrier 20 and at least parts of the first hollow space 41. The top part is a separate component which can be fixedly attached to the mounting block. An O-ring is arranged in a horizontal plane between the top part and the mounting block to seal the third hollow space 43 so that no inert gas escapes. The overall height H of the exchangeable spark unit 10 can be adjusted by influencing the height of the top part. This may be performed with the top part attached to the mounting block, as shown, or with the top part separated from the mounting block.

When exchanging the exchangeable spark unit 10, the electrical connection 2 of the electrode 26 can be loosened. In particular, a cable of an electrical power source can be removed and placed again on the replacement spark unit. The electrical connection 2 can be realized as plug or socket for easy disconnection and connection.

The coupling interface 30 is formed by the bottom surface of the exchangeable spark unit 10 and forms a plane. The coupling interface 32 of the optical emission spectrometer 12 is formed correspondingly. A receiving space 65 is arranged in the exchangeable spark unit 10 to receive a positioning pin 64 to facilitate correct positioning of the exchangeable spark unit 10 with respect to the optical emission spectrometer.

Figure 3 shows the system 15 with the exchangeable spark unit 10 and the optical emission spectrometer 12 in a perspective view. Flange-like protrusions on the lower end of the exchangeable spark unit 10 and on the upper end of the optical emission spectrometer 12 are shown which are fixed to each other by a fixing means 60, namely a screw 62. A similar fixing is provided at the back side.

**List of reference signs**

| | |
|---|---|
| electrical insulation | 1 |
| electrical connection | 2 |
| exchangeable spark unit | 10 |
| optical emission spectrometer | 12 |
| spectrometer | 13 |
| system | 15 |
| sample carrier | 20 |
| sample plane | 22 |
| aperture | 24 |
| electrode | 26 |
| housing | 28 |
| centerline | 29 |
| centerline | 29' |
| distance | D |
| height | H |
| coupling interface | 30 |
| coupling interface | 32 |
| first hollow space | 41 |
| second hollow space | 42 |
| third hollow space | 43 |
| optical component | 44 |
| mirror | 45 |
| light outlet | 46 |
| window | 47 |
| filter | 48 |
| angle | α |
| angle | β |
| bearing surface | 50 |
| shoulder | 51 |
| positioning element | 52 |
| gas inlet | 55 |
| gas outlet | 56 |
| fixing means | 60 |
| screw | 62 |
| positioning pin | 64 |
| receiving space | 65 |

## Claims

1. An exchangeable spark unit (10) for an optical emission spectrometer (12), comprising
- a sample carrier (20) defining a sample plane (22) for positioning a sample to be analyzed, said sample carrier (20) having an aperture (24),
- an electrode (26) arranged in a distance (D) to the sample plane (22) in the region of the aperture (24) such that a spark can be generated between the electrode (26) and a sample positioned in the sample plane (22) for emitting light,
- a coupling interface (30) for mechanically coupling the exchangeable spark unit (10) with the optical emission spectrometer (12),
**characterized in that** the exchangeable spark unit (10) further comprises an optical component (44) for influencing the emitted light and that
the electrode and the optical component are contained in a single compartment of the exchangeable spark unit.

2. The exchangeable spark unit (10) according to claim 1, **characterized in that** the exchangeable spark unit (10) comprises a mirror (45) as the optical component (44).

3. The exchangeable spark unit (10) according to claim 2, **characterized in that** the exchangeable spark unit (10) includes a first hollow space (41) for light to pass from the spark to be generated to the mirror (45) and a second hollow space (42) for light to pass from the mirror (45) towards a light outlet (46) of the exchangeable spark unit (10), wherein an angle α between a longitudinal extension of the first hollow space (41) and a longitudinal extension of the second hollow space (42) is between 45° and 120°, in particular between 90° and 110°.

4. The exchangeable spark unit (10) according to claim 2 or claim 3, **characterized in that** the mirror (45) is configured to reflect incident light having an angle β between 5° and 20° with respect to the sample plane (20) and/or that the mirror (45) is arranged such that light reflected by the mirror (45) runs essentially vertically downwards.

5. The exchangeable spark unit (10) according to any of the preceding claims, **characterized in that** the exchangeable spark unit (10) comprises a window (47) for allowing light to pass towards the optical emission spectrometer (12) while closing a hollow space (41, 42) for light to pass through the exchangeable spark unit (10).

6. The exchangeable spark unit (10) according to claim 5, **characterized in that** the window (47) is configured as a further optical component, in particular as a filter (48) that allows only a part of incident light to be passed to the optical emission spectrometer (12).

7. The exchangeable spark unit (10) according to any of the preceding claims, **characterized in that** the electrode (26) comprises a bearing surface (50) and the exchangeable spark unit (10) comprises a positioning element (52) for positioning the bearing surface (50) in the exchangeable spark unit (10) such that the distance (D) between the electrode (26) and the sample plane (22) is determined by the positioning element (52).

8. The exchangeable spark unit (10) according to any of claims 3 to 7, **characterized in that** the exchangeable spark unit (10) comprises a gas inlet (55) arranged in the second hollow space (42).

9. The exchangeable spark unit (10) according to any of claims 3 to 8, **characterized in that** the exchangeable spark unit (10) comprises a gas outlet (56) arranged in a third hollow space (43) through which the electrode (26) extends.

10. The exchangeable spark unit (10) according to any of the preceding claims, **characterized in that** the exchangeable spark unit (10) comprises fixing means (60) for mechanically fixing the exchangeable spark unit (10) to an optical emission spectrometer (12) in a mechanically coupled state, in particular including one or more screws (62), and/or that the exchangeable spark unit (10) comprises a positioning pin (64) or a receiving space (65) for receiving a positioning pin (64) for positioning the exchangeable spark unit (10) with respect to the optical emission spectrometer (12).

11. The exchangeable spark unit (10) according to any of the preceding claims, **characterized in that** the exchangeable spark unit (10) comprises an orientation means to reach a defined angular orientation between the exchangeable spark unit (10) and the spectrometer (12) when in a mechanically coupled state.

12. The exchangeable spark unit (10) according to any of the preceding claims, **characterized in that** the sample carrier (20) is made from an electrically conductive material and comprises an electrical contact for applying an electrical potential to the sample positioned on the sample carrier (20) via the sample carrier (20).

13. A system (15) for analyzing a sample using optical emission spectrometry, the system (15) comprising an exchangeable spark unit (10) according to any of the preceding claims and an optical emission spectrometer (12), in particular a Czerny-Turner spectrometer (13), wherein the optical emission spectrometer (12) comprises a coupling interface (32) to which the coupling interface (30) of the exchangeable spark unit (10) can be mechanically coupled.

14. A method for calibrating an exchangeable spark unit (10), the method comprising:
- Providing an exchangeable spark unit (10) according to one of the claims 1 to 12,
- Detecting the distance (D) between the electrode (26) and the sample plane (22) and, if the distance (D) deviates from a desired distance, adjusting a mounting position of the electrode (26).

15. The method according to claim 14, the method further comprising detecting a height (H) of the exchangeable spark unit (10) and, if the height (H) deviates from a desired height, adjusting the height (H) of the exchangeable spark unit (10).

## Patentansprüche

1. Austauschbare Funkeneinheit (10) für ein optisches Emissionsspektrometer (12), umfassend
- einen Probenträger (20), der eine Probenebene (22) zum Positionieren einer zu analysierenden Probe definiert, wobei der Probenträger (20) eine Öffnung (24) aufweist,
- eine Elektrode (26), die in einer Distanz (D) zu der Probenebene (22) in dem Bereich der Öffnung (24) derart angeordnet ist, dass ein Funke zwischen der Elektrode (26) und einer Probe, die in der Probenebene (22) positioniert ist, zum Emittieren von Licht erzeugt werden kann,
- eine Kopplungsschnittstelle (30) zum mechanischen Koppeln der austauschbaren Funkeneinheit (10) mit dem optischen Emissionsspektrometer (12),
**dadurch gekennzeichnet, dass** die austauschbare Funkeneinheit (10) ferner eine optische Komponente (44) zum Beeinflussen des emittierten Lichts umfasst und dass die Elektrode und die optische Komponente in einer einzigen Kammer der austauschbaren Funkeneinheit enthalten sind.

2. Austauschbare Funkeneinheit (10) nach Anspruch 1, **dadurch gekennzeichnet, dass** die austauschbare Funkeneinheit (10) einen Spiegel (45) als die optische Komponente (44) umfasst.

3. Austauschbare Funkeneinheit (10) nach Anspruch 2, **dadurch gekennzeichnet, dass** die austauschbare Funkeneinheit (10) einen ersten Hohlraum (41), durch den Licht von dem zu erzeugenden Funken zu dem Spiegel (45) strömt, und einen zweiten Hohlraum (42), durch den Licht von dem Spiegel (45) zu einem Lichtauslass (46) der austauschbaren Funkeneinheit (10) hin strömt, einschließt, wobei ein Winkel α zwischen einer Längserstreckung des ersten Hohlraums (41) und einer Längserstreckung des zweiten Hohlraums (42) zwischen 45° und 120°, insbesondere zwischen 90° und 110°, liegt.

4. Austauschbare Funkeneinheit (10) nach Anspruch 2 oder 3, **dadurch gekennzeichnet, dass** der Spiegel (45) konfiguriert ist, um einfallendes Licht, das einen Winkel β zwischen 5° und 20° in Bezug auf die Probenebene (20) aufweist, zu reflektieren, und/oder dass der Spiegel (45) derart angeordnet ist, dass Licht, das durch den Spiegel (45) reflektiert wird, im Wesentlichen vertikal nach unten verläuft.

5. Austauschbare Funkeneinheit (10) nach einem der vorstehenden Ansprüche, **dadurch gekennzeichnet, dass** die austauschbare Funkeneinheit (10) ein Fenster (47) umfasst, um Licht zu erlauben, zu dem optischen Emissionsspektrometer (12) hin zu strömen, während ein Hohlraum (41, 42), durch den Licht durch die austauschbare Funkeneinheit (10) strömt, geschlossen wird.

6. Austauschbare Funkeneinheit (10) nach Anspruch 5, **dadurch gekennzeichnet, dass** das Fenster (47) als eine weitere optische Komponente konfiguriert ist, insbesondere als ein Filter (48), der nur erlaubt, dass ein Teil des einfallenden Lichts zu dem optischen Emissionsspektrometer (12) strömt.

7. Austauschbare Funkeneinheit (10) nach einem der vorstehenden Ansprüche, **dadurch gekennzeichnet, dass** die Elektrode (26) eine Lageroberfläche (50) umfasst und die austauschbare Funkeneinheit (10) ein Positionierungselement (52) zum derartigen Positionieren der Lageroberfläche (50) in der austauschbaren Funkeneinheit (10) umfasst, dass die Distanz (D) zwischen der Elektrode (26) und der Probenebene (22) durch das Positionierungselement (52) bestimmt wird.

8. Austauschbare Funkeneinheit (10) nach einem der Ansprüche 3 bis 7, **dadurch gekennzeichnet, dass** die austauschbare Funkeneinheit (10) einen Gaseinlass (55) umfasst, der in dem zweiten Hohlraum (42) angeordnet ist.

9. Austauschbare Funkeneinheit (10) nach einem der Ansprüche 3 bis 8, **dadurch gekennzeichnet, dass** die austauschbare Funkeneinheit (10) einen Gasauslass (56) umfasst, der in einem dritten Hohlraum (43) angeordnet ist, durch den sich die Elektrode (26) erstreckt.

10. Austauschbare Funkeneinheit (10) nach einem der vorstehenden Ansprüche, **dadurch gekennzeichnet, dass** die austauschbare Funkeneinheit (10) ein Befestigungsmittel (60) zum mechanischen Befestigen der austauschbaren Funkeneinheit (10) an einem optischen Emissionsspektrometer (12) in einem mechanisch gekoppelten Zustand umfasst, insbesondere einschließlich einer oder mehrerer Schrauben (62), und/oder dass die austauschbare Funkeneinheit (10) einen Positionierungsstift (64) oder einen Aufnahmeraum (65) zum Aufnehmen eines Positionierungsstifts (64) zum Positionieren der austauschbaren Funkeneinheit (10) in Bezug auf das optische Emissionsspektrometer (12) umfasst.

11. Austauschbare Funkeneinheit (10) nach einem der vorstehenden Ansprüche, **dadurch gekennzeichnet, dass** die austauschbare Funkeneinheit (10) ein Ausrichtungsmittel umfasst, um in einem mechanisch gekoppelten Zustand eine definierte Winkelausrichtung zwischen der austauschbaren Funkeneinheit (10) und dem Spektrometer (12) zu erreichen.

12. Austauschbare Funkeneinheit (10) nach einem der vorstehenden Ansprüche, **dadurch gekennzeichnet, dass** der Probenträger (20) aus einem elektrisch leitfähigen Material besteht und einen elektrischen Kontakt zum Anlegen eines elektrischen Potenzials an die Probe, die auf dem Probenträger (20) positioniert ist, über den Probenträger (20) umfasst.

13. System (15) zum Analysieren einer Probe unter Verwendung von optischer Emissionsspektrometrie, das System (15) umfassend eine austauschbare Funkeneinheit (10) nach einem der vorstehenden Ansprüche und ein optisches Emissionsspektrometer (12), insbesondere ein Czerny-Turner-Spektrometer (13), wobei das optische Emissionsspektrometer (12) eine Kopplungsschnittstelle (32) umfasst, an die die Kopplungsschnittstelle (30) der austauschbaren Funkeneinheit (10) mechanisch gekoppelt werden kann.

14. Verfahren zum Kalibrieren einer austauschbaren Funkeneinheit (10), das Verfahren umfassend:
- Bereitstellen einer austauschbaren Funkeneinheit (10) nach einem der Ansprüche 1 bis 12,
- Erfassen der Distanz (D) zwischen der Elektrode (26) und der Probenebene (22) und, falls die Distanz (D) von einer gewünschten Distanz abweicht, Einstellen einer Montageposition der Elektrode (26).

15. Verfahren nach Anspruch 14, das Verfahren ferner umfassend das Erfassen einer Höhe (H) der austauschbaren Funkeneinheit (10) und, falls die Höhe (H) von einer gewünschten Höhe abweicht, das Einstellen der Höhe (H) der austauschbaren Funkeneinheit (10).

## Revendications

1. Unité d'allumage échangeable (10) pour un spectromètre d'émission optique (12), comprenant
- un support d'échantillon (20) définissant un plan d'échantillon (22) pour positionner un échantillon à analyser, ledit support d'échantillon (20) ayant une ouverture (24),
- une électrode (26) agencée à une distance (D) du plan d'échantillon (22) dans la région de l'ouverture (24) de telle sorte qu'une étincelle peut être générée entre l'électrode (26) et un échantillon positionné dans le plan d'échantillon (22) pour émettre de la lumière,
- une interface d'accouplement (30) pour accoupler mécaniquement l'unité d'allumage échangeable (10) au spectromètre d'émission optique (12),
**caractérisée en ce que** l'unité d'allumage échangeable (10) comprend en outre un composant optique (44) pour influencer la lumière émise, et **en ce que**
l'électrode et le composant optique sont contenus dans un compartiment unique de l'unité d'allumage échangeable.

2. Unité d'allumage échangeable (10) selon la revendication 1, **caractérisée en ce que** l'unité d'allumage échangeable (10) comprend un miroir (45) en tant que composant optique (44).

3. Unité d'allumage échangeable (10) selon la revendication 2, **caractérisée en ce que** l'unité d'allumage échangeable (10) comporte un premier espace creux (41) pour que la lumière passe de l'étincelle à générer au miroir (45) et un deuxième espace creux (42) pour que la lumière passe du miroir (45) vers une sortie de lumière (46) de l'unité d'allumage échangeable (10), dans laquelle un angle α entre une extension longitudinale du premier espace creux (41) et une extension longitudinale du deuxième espace creux (42) est compris entre 45° et 120°, en particulier entre 90° et 110°.

4. Unité d'allumage échangeable (10) selon la revendication 2 ou la revendication 3, **caractérisée en ce que** le miroir (45) est conçu pour réfléchir une lumière incidente ayant un angle β entre 5° et 20° par rapport au plan d'échantillon (20) et/ou **en ce que** le miroir (45) est agencé de telle sorte que la lumière réfléchie par le miroir (45) se dirige essentiellement verticalement vers le bas.

5. Unité d'allumage échangeable (10) selon l'une quelconque des revendications précédentes, **caractérisée en ce que** l'unité d'allumage échangeable (10) comprend une fenêtre (47) pour permettre à la lumière de passer vers le spectromètre d'émission optique (12) tout en fermant un espace creux (41, 42) pour que la lumière passe à travers l'unité d'allumage échangeable (10).

6. Unité d'allumage échangeable (10) selon la revendication 5, **caractérisée en ce que** la fenêtre (47) est conçue en tant que composant optique supplémentaire, en particulier en tant que filtre (48) qui ne laisse passer qu'une partie de la lumière incidente vers le spectromètre d'émission optique (12).

7. Unité d'allumage échangeable (10) selon l'une quelconque des revendications précédentes, **caractérisée en ce que** l'électrode (26) comprend une surface d'appui (50) et l'unité d'allumage échangeable (10) comprend un élément de positionnement (52) pour positionner la surface d'appui (50) dans l'unité d'allumage échangeable (10) de telle sorte que la distance (D) entre l'électrode (26) et le plan d'échantillon (22) est déterminée par l'élément de positionnement (52).

8. Unité d'allumage échangeable (10) selon l'une quelconque des revendications 3 à 7, **caractérisée en ce que** l'unité d'allumage échangeable (10) comprend une entrée de gaz (55) agencée dans le deuxième espace creux (42).

9. Unité d'allumage échangeable (10) selon l'une quelconque des revendications 3 à 8, **caractérisée en ce que** l'unité d'allumage échangeable (10) comprend une sortie de gaz (56) agencée dans un troisième espace creux (43) à travers lequel l'électrode (26) s'étend.

10. Unité d'allumage échangeable (10) selon l'une quelconque des revendications précédentes, **caractérisée en ce que** l'unité d'allumage échangeable (10) comprend un moyen de fixation (60) pour fixer mécaniquement l'unité d'allumage échangeable (10) à un spectromètre d'émission optique (12) dans un état mécaniquement accouplé, comportant en particulier une ou plusieurs vis (62), et/ou **en ce que** l'unité d'allumage échangeable (10) comprend une broche de positionnement (64) ou un espace de réception (65) pour recevoir une broche de positionnement (64) pour positionner l'unité d'allumage échangeable (10) par rapport au spectromètre d'émission optique (12).

11. Unité d'allumage échangeable (10) selon l'une quelconque des revendications précédentes, **caractérisée en ce que** l'unité d'allumage échangeable (10) comprend un moyen d'orientation pour atteindre une orientation angulaire définie entre l'unité d'allumage échangeable (10) et le spectromètre (12) lorsqu'ils sont dans un état mécaniquement accouplé.

12. Unité d'allumage échangeable (10) selon l'une quelconque des revendications précédentes, **caractérisée en ce que** le support d'échantillon (20) est constitué d'un matériau électriquement conducteur et comprend un contact électrique pour appliquer un potentiel électrique à l'échantillon positionné sur le support d'échantillon (20) par l'intermédiaire du support d'échantillon (20).

13. Système (15) d'analyse d'un échantillon à l'aide d'une spectrométrie d'émission optique, le système (15) comprenant une unité d'allumage échangeable (10) selon l'une quelconque des revendications précédentes et un spectromètre d'émission optique (12), en particulier un spectromètre de Czerny-Turner (13), dans lequel le spectromètre d'émission optique (12) comprend une interface d'accouplement (32) à laquelle l'interface d'accouplement (30) de l'unité d'allumage échangeable (10) peut être accouplée mécaniquement.

14. Procédé d'étalonnage d'une unité d'allumage échangeable (10), le procédé comprenant :
- la fourniture d'une unité d'allumage échangeable (10) selon l'une des revendications 1 à 12,
- la détection de la distance (D) entre l'électrode (26) et le plan d'échantillon (22) et, si la distance (D) s'écarte d'une distance souhaitée, l'ajustement d'une position de montage de l'électrode (26).

15. Procédé selon la revendication 14, le procédé comprenant en outre la détection d'une hauteur (H) de l'unité d'allumage échangeable (10) et, si la hauteur (H) s'écarte d'une hauteur souhaitée, l'ajustement de la hauteur (H) de l'unité d'allumage échangeable (10).
